# EUROPEAN PATENT SPECIFICATION

(11) **EP 4 655 891 B1**
(45) Date of publication and mention of the grant of the patent: **22.07.2026**
(21) Application number: 24700446.8
(22) Date of filing: 15.01.2024
(51) Int. Cl.: H04B 10/116

(54) **A METHOD FOR OPTICAL WIRELESS BEAM ALIGNMENT IN SHORT-RANGE NARROW BEAM P2P SYSTEMS**
VERFAHREN ZUR OPTISCHEN DRAHTLOSEN STRAHLAUSRICHTUNG IN P2P-SYSTEMEN MIT SCHMALEM STRAHL UND KURZER REICHWEITE
PROCÉDÉ D'ALIGNEMENT DE FAISCEAU OPTIQUE SANS FIL DANS DES SYSTÈMES P2P À FAISCEAU ÉTROIT À COURTE PORTÉE

(30) Priority: 23.01.2023 EP 23152878
(43) Date of publication of application: 03.12.2025
(73) Proprietor: Signify Holding B.V., 5656 AE Eindhoven (NL)
(72) Inventor: JORDAN, Christian, 5656 AE Eindhoven (NL); ROJAS CALVENTE, Francisco, David, 5656 AE Eindhoven (NL); BLUSCHKE, Andreas, Felix, Alfred, 5656 AE Eindhoven (NL)
(74) Representative: Verweij, Petronella Daniëlle
(86) International application number: PCT/EP2024/050752
(87) International publication number: WO 2024/156531

(56) References cited:
- WO-A1-2012/109248
- US-A- 5 777 768
- US-B1- 9 755 739

## Description

### FIELD OF THE INVENTION

The invention relates to the field of optical wireless communication, such as Li-Fi communication. More particularly, various apparatus, systems, and methods are disclosed herein related to a secure optical wireless communication system.

### BACKGROUND OF THE INVENTION

To enable more and more electronic devices like laptops, tablets, and smartphones to connect wirelessly to the Internet, wireless communication confronts unprecedented requirements on data rates and link qualities, and such requirements keep on growing year over year, considering the emerging digital revolution related to Internet-of-Things (IoT). Radio frequency technology like Wi-Fi has limited spectrum capacity to embrace this revolution. In the meanwhile, light fidelity (Li-Fi) is drawing more and more attention with its intrinsic security enhancement and capability to support higher data rates over the available bandwidth in visible light, Ultraviolet (UV), and Infrared (IR) spectra. Furthermore, Li-Fi is directional and shielded by light blocking materials, which provides it with the potential to deploy a larger number of access points, as compared to Wi-Fi, in a dense area of users by spatially reusing the same bandwidth. These key advantages over wireless radio frequency communication make Li-Fi a promising secure solution to mitigate the pressure on the crowded radio spectrum for IoT applications and indoor wireless access. Other possible benefits of Li-Fi may include guaranteed bandwidth for a certain user, and the ability to function safely in areas otherwise susceptible to electromagnetic interference. Therefore, Li-Fi is a very promising technology to enable the next generation of immersive connectivity.

To achieve a high data throughput in short-range point to point optical links, a narrow beam transmitter source is used, together with a small low capacitance photoreceiver. Due to this narrow beam characteristic, a precise alignment between transmitter and receiver is necessary. For non-static systems, this may be solved by different types of electromechanical actuators and beam tracking methods.

One low-cost and compact method for optical beam tracking can be realized with an additional low-frequency beacon transmitter. This system operates properly when there is a long separation distance between the optical transmitter and the optical receiver. For short distances, due to the high-speed optical transceiver being physically separated from the low-frequency beacon-based tracking system, the deviation in the tracking can be significant due to near-field transmission characteristics. To solve this problem, the units can be calibrated to compensate for the deviation for a specific communication distance d. However, the calibration will only work for systems that operate at a fixed communication distance and not for fully dynamic ones. Patent document US5,777,768 discloses a free space optical communication link comprising the use of two beacon transmitters as well as a quadrant detector.

### SUMMARY OF THE INVENTION

The present invention aims to solve the problem of misalignment in high-speed narrow beam optical communication systems, when using an auxiliary beacon transmitter for beam tracking and alignment. Due to near-field characteristics, when the distance between the two communication units is short, such as less than 1m or even in cm range, the offset between the auxiliary beacon transmitter and the high-speed data transceiver in each unit introduces an alignment error that can degrade the performance of the optical communication link.

In view of the above, the present disclosure is directed to methods, apparatus, and systems for providing an efficient beam alignment scheme in a point-to-point narrow beam optical wireless communication system. More particularly, the goal of this invention is achieved by an optical wireless communication system as claimed in claim 1, by an apparatus as claimed in claim 8, and by a method of an apparatus as claimed in claim 14.

In accordance with a first aspect of the invention an optical wireless communication system is provided. An optical wireless communication system comprising:
- a first apparatus comprising:
   - an optical transmitter configured to send optical wireless data signals to a remote second apparatus;
   - two auxiliary beacon transmitters configured to send optical wireless beacon signals with approximately a same amount of optical power for assisting a beam alignment procedure in the second apparatus; wherein the optical transmitter and the two auxiliary beacon transmitters are mounted on a first surface of the first apparatus with the two auxiliary beacon transmitters placed symmetrically on both sides of the optical transmitter;
- a second apparatus comprising:
   - an optical receiver configured to receive optical wireless data signals from the first apparatus;
   - two auxiliary four-quadrant photodetectors configured to detect optical wireless beacon signals from the first apparatus; wherein the optical receiver and the two auxiliary four-quadrant photodetectors are mounted on a second surface of the second apparatus with the two four-quadrant photodetectors placed symmetrically on both sides of the optical receiver;
   - a controller configured to derive a control signal based on optical wireless beacon signals detected by the two auxiliary four-quadrant photodetectors for controlling an actuator; and
   - the actuator configured to adjust, based on the control signal derived by the controller, the position of the surface on which the optical receiver and the two auxiliary four-quadrant photodetectors are mounted, to align the second apparatus with the first apparatus for optical wireless data communication.

To solve the problem addressed above, instead of comprising a single auxiliary beacon transmitter and a single auxiliary four-quadrant photodetector in the apparatus, two identical auxiliary beacon transmitters are deployed at the transmitting unit (the first apparatus) and two auxiliary four-quadrant photodiode receivers are deployed at the receiving unit (the second apparatus) to align the two communication units and also to fully compensate the offset resulted from the physical separation between the auxiliary beacon transmitter and the optical transmitter, as well as the physical separation between the auxiliary four-quadrant photodiode receiver and the optical receiver.

A control signal is derived based on beacon signals detected by the two auxiliary four-quadrant photodetectors respectively, and then the control signal is used to control the actuator to adjust the position of the second unit for an accurate beam alignment.

The optical wireless communication may be carried out in visible light, Ultraviolet (UV), and Infrared (IR) spectra. Thus, optical wireless communication may also be called a Li-Fi communication or a Visible Light Communication (VLC).

Each optical transmitter or emitter comprises at least a light source for optical data transmission. The light source may be one of a light-emitting diode (LED), a laser diode, a vertical-cavity surface-emitting laser (VCSEL), or an Edge Emitting Laser Diode (EELD). Preferably, the optical transmitter comprises at least one of a LED and a VCSEL, and each auxiliary beacon transmitter comprises a LED.

The optical transmitter is used for high speed data communication, which preferably comprises a narrow beam light source. Beam angle or beam width is the aperture angle from where most of the power is radiated. For example, the half power beam width is the angle between the half-power (-3dB) points of the main lobe of the radiation pattern. For the horizontal plane, beam angle or beam width is usually expressed in degrees. A beam angle of 10 degrees or less is typically considered to be narrow.

The optical receiver comprises at least one photodiode. The photodiode may also be called a light detector, a photo detector or a photo sensor, which may be a PIN diode, an Avalanche Photo Diode (APD), or a photomultiplier.

It is necessary to have the two auxiliary beacon transmitters placed symmetrically on both sides of the optical transmitter and the two auxiliary four-quadrant photodetectors placed symmetrically on both sides of the optical receiver. Different arrangements are possible.

Advantageously, the first surface has a first axis in parallel to a horizontal plane and a second axis perpendicular to the first axis, and the second surface has a third axis in parallel to the horizontal plane and a fourth axis perpendicular to the third axis;
wherein the optical wireless communication system is arranged such that either
- the two auxiliary beacon transmitters and the optical transmitter are placed along the first axis of the first surface, and the two auxiliary four-quadrant photodetectors and the optical receiver are placed along the fourth axis of the second surface, or
- the two auxiliary beacon transmitters and the optical transmitter are placed along the second axis of the first surface, and the two auxiliary four-quadrant photodetectors and the optical receiver are placed along the third axis of the second surface, or
- the two auxiliary beacon transmitters and the optical transmitter are placed along the first axis of the first surface, and the two auxiliary four-quadrant photodetectors and the optical receiver are placed along the third axis of the second surface, or
- the two auxiliary beacon transmitters and the optical transmitter are placed along the second axis of the first surface, and the two auxiliary four-quadrant photodetectors and the optical receiver are placed along the fourth axis of the second surface.

Preferably, the control signal is derived based on a comparison among four signals each representing a summation of detected optical wireless beacon signals in corresponding quadrants of the two auxiliary four-quadrant photodetectors.

Beneficially, the control signal is used to control the actuator to adjust the position of the second surface along the third and/or the fourth axis or rotate the second surface around the third and/or the fourth axis.

Thus, by adjusting the position of the second surface in two axes via rolling and/or pitching, the second apparatus can be aligned with the first apparatus for optical data communication.

In one example, the first apparatus further comprises a local calibration loop to calibrate the optical power emitted by the two auxiliary beacon transmitters.

Although it is important to keep the two auxiliary transmitters emitting approximately the same amount of optical power, this requirement may not always be satisfied due to the binning and ageing of a light source, such as a LED or Laser. Therefore, it is beneficial to deploy a local calibration loop to calibrate the optical power emitted by the two auxiliary beacon transmitters, and then the requirement can be guaranteed.

Advantageously, the local calibration loop comprises two photodiodes configured to respectively detect leakage optical power of the two auxiliary beacon transmitters for estimating an actual emitted signal strength of an individual auxiliary beacon transmitter.

In this preferred setup, an additional photodiode is placed close to each auxiliary beacon transmitter to detect leakage optical power of the corresponding auxiliary beacon transmitter, and then the actual emitted signal strength of the auxiliary beacon transmitter can be estimated. Thus, a local optical feedback loop is deployed to compensate for differences on output power between the two auxiliary beacon transmitter due to binning and ageing, and a more accurate output power control for the two auxiliary beacon transmitters can be achieved.

In a preferred setup, the first apparatus and the second apparatus are configured to carry out bi-directional optical wireless data communication, wherein the optical transmitter of the first apparatus and the optical receiver of the second apparatus are both optical transceivers, and the first apparatus and the second apparatus further comprise all other modules of each other.

To carry out bi-directional high speed optical wireless data communication, it is beneficial that the two remote communication units are identical, such that the beam alignment procedure can be implemented by both sides.

In accordance with a second aspect of the invention, an apparatus is provided. An apparatus comprising:
- an optical transceiver configured to carry out bi-directional optical wireless data communication with a remote apparatus;
- two auxiliary beacon transmitters configured to send optical wireless beacon signals with a same amount of optical power for assisting a beam alignment procedure in the remote apparatus;
- two auxiliary four-quadrant photodetectors configured to detect optical wireless beacon signals from the remote apparatus;
   wherein the optical transceiver, the two auxiliary beacon transmitters, and the two auxiliary four-quadrant photodetectors are all mounted on a same surface of the apparatus, and the two auxiliary beacon transmitters, as well as the two auxiliary four-quadrant photodetectors, are placed symmetrically on both sides of the optical transceiver respectively;
   the apparatus further comprising:
      - a controller configured to derive a control signal based on the optical wireless beacon signals detected by the two auxiliary four-quadrant photodetectors for controlling an actuator; and
      - the actuator configured to adjust, based on the control signal derived by the controller, the position of the surface to align the apparatus with the remote apparatus for optical wireless data communication.

Thus, the apparatus comprises all the key components for carrying out narrow beam alignment and bi-directional data communication. Preferably, the optical wireless transceiver or high-speed data transceiver comprises a narrow beam emitter and receiver. The two auxiliary beacon transmitters are placed around the high-speed transceiver to send beacon signals with approximately the same amount of output power. The beacon signals may be sent on a lower frequency and lower data rate as compared to the optical data communication carried out by the optical wireless transceiver. Two auxiliary four-quadrant photoreceiver are also placed around the high-speed data transceiver to detect beacons from a remote communication partner for beam alignment. The control signal derived by the controller based on the beacon signals detected by the two auxiliary four-quadrant photoreceiver is used to control the actuator, preferably in two axes (roll and pitch), to align the apparatus towards the remote communication partner.

Advantageously, the surface has a first axis in parallel to a horizontal plane and a second axis perpendicular to the first axis;
wherein the apparatus is arranged such that the optical transceiver is placed at the intersection of the first axis and the second axis, and
- the two auxiliary beacon transmitters are placed along the first axis and the two auxiliary four-quadrant photodetectors are placed along the second axis, or
- the two auxiliary beacon transmitters are placed along the second axis and the two auxiliary four-quadrant photodetectors are placed along the first axis.

Beneficially, the control signal is derived based on a comparison among four signals each representing a summation of detected optical wireless beacon signals in corresponding quadrants of the two auxiliary four-quadrant photodetectors.

Preferably, the control signal is used to control the actuator to adjust the position of the surface along the first and/or the second axis.

In one example, the apparatus further comprises a local calibration loop to calibrate the optical power emitted by the two auxiliary beacon transmitters.

Beneficially, the local calibration loop comprises two photodiodes configured to respectively detect leakage optical power of the two auxiliary beacon transmitters for estimating an actual emitted signal strength of an individual auxiliary beacon transmitter.

In accordance with a third aspect of the invention, a method of an apparatus is provided. A method of an apparatus for carrying out optical wireless communication with a remote apparatus, the apparatus comprising an optical transceiver, two auxiliary beacon transmitters, and two auxiliary four-quadrant photodetectors mounted on a same surface of the apparatus, wherein the two auxiliary beacon transmitters, as well as the two auxiliary four-quadrant photodetectors, are placed symmetrically on both sides of the optical transceiver respectively;
the method comprising the steps of the apparatus:
- sending optical wireless beacon signals, by the two auxiliary beacon transmitters, with approximately a same amount of optical power for assisting a beam alignment procedure in the remote apparatus;
- detecting optical wireless beacon signals from the remote apparatus by the two auxiliary four-quadrant photodetectors;
- deriving a control signal based on the optical wireless beacon signals detected by the two auxiliary four-quadrant photodetectors; and
- adjusting, based on the control signal, the position of the surface to align the apparatus with the remote apparatus for optical wireless data communication; and
- carrying out bi-directional optical wireless data communication with the remote apparatus.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.
Fig. 1 illustrates one example of a beam tracking setup according to prior art;
Fig. 2 illustrates another example of a beam tracking setup according to prior art;
Fig. 3 demonstrates a block diagram of an optical wireless communication system according to the present invention;
Fig. 4 illustrates one example of a beam alignment setup according to the present invention;
Fig. 5 shows an implementation example of a control loop in an apparatus;
Fig. 6 illustrates a situation when two optical communication units are aligned;
Fig. 7 shows an implementation example of a local calibration loop to calibrate the optical power emitted by an auxiliary beacon transmitter; and
Fig. 8 shows a flow chart of a method carried out by an apparatus according to the present invention.

### DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

To achieve a high data throughput in short-range point to point optical wireless communication, a narrow beam transmitter source is typically used, together with a small low capacitance photoreceiver. Due to this narrow beam characteristics, a precise alignment between transmitter and receiver is necessary. For non-static systems, this requires different types of electromechanical actuators and beam tracking methods.

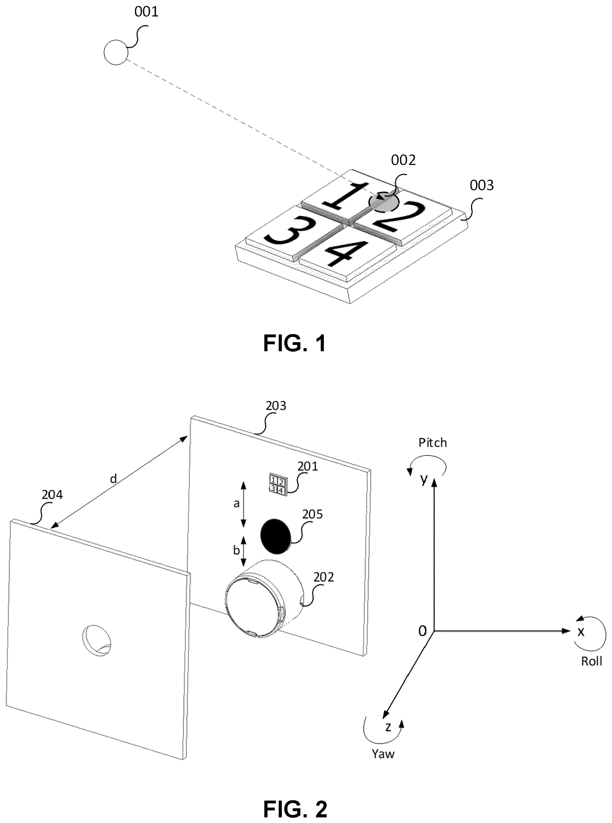

FIG. 1 illustrates one example of a beam tracking setup according to prior art. In this example, a low-cost and compact method for optical beam tracking can be realized with an additional low-frequency beacon transmitter 001, which would be received by a four-quadrant photodiode receiver 003 with an imaging lens in the opposite unit. Depending on the orientation towards the receiver, the transmitter source will produce a different signal level on each quadrant of the receiver 002. By operating with the received signal strength of the four sectors, the error vectors for the x-y axis can be calculated and fed to the actuators to correct the position of the receiving unit in pitch and roll rotations. The same is done with the opposite unit.

Such a system usually operates properly if there is a long separation distance between two communication units. However, for short separation distances, such as below 1m or even in the cm range, due to the high-speed transceiver being physically separated from the low-frequency beacon-based tracking system, the deviation in the tracking can be significant due to near-field transmission characteristics.

FIG. 2 illustrates another example of a beam tracking setup according to prior art, where two symmetrical point to point units 203, 204 are separated by a distance d. The circle in the middle of the unit 203 represents the high-speed optical transceiver 205. The four-quadrant photodiode receiver or the auxiliary tracking receiver 201 and auxiliary beacon transmitter 202 are placed around high-speed optical transceiver 205, separated by a distance a and b respectively. The shorter the distance d between the units, the greater the separation distances a, b will impact the beam alignment accuracy of the high-speed transceiver. A misaligned transceiver will also be affected by the rotation of the units in the z-axis (yaw).

To solve the problem of the setup shown in FIG. 2, the units can be calibrated to compensate for this deviation for a specific distance d. However, the calibration will only work for systems that only operate at a fixed separation distance and not for fully dynamic ones.

The presented solution discloses the following key contributions to improve the alignment accuracy:
- Deploying two identical auxiliary beacon transmitters, as well as two 4-quadrant photodiode receivers, to compensate offsets in x-y axis.
- Creating an internal optical feedback mechanism in the beacon transmitters of each unit, to automatically compensate for the difference in optical power due to LED/Laser binning and ageing, therefore creating two identical beacon transmitters to ensure an accurate detection.

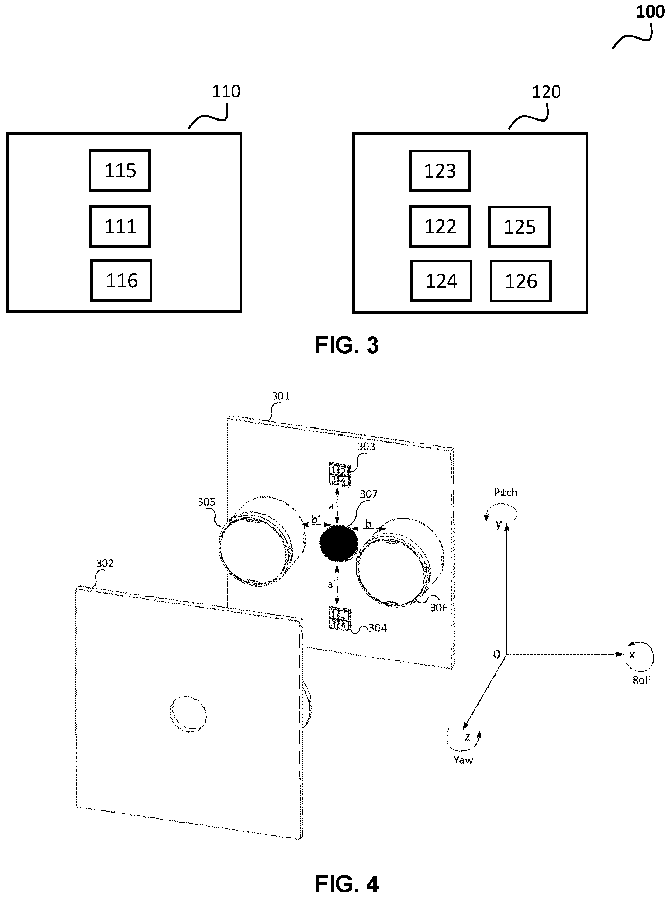

FIG. 3 demonstrates a block diagram of an optical wireless communication system 100 according to the present invention. The optical wireless communication system 100 comprising a first apparatus 110 and a second apparatus 120.

As a basic setup, the first apparatus 110 comprises an optical transmitter 111 and two auxiliary beacon transmitters 115, 116. The optical transmitter 111 is configured to send optical wireless data signals to a remote second apparatus 120. The two auxiliary beacon transmitters 115, 116 are configured to send optical wireless beacon signals with a same amount of optical power for assisting a beam alignment procedure in the second apparatus 120. The optical transmitter 111 and the two auxiliary beacon transmitters 115, 116 are mounted on a first surface of the first apparatus 110 with the two auxiliary beacon transmitters 115, 116 placed symmetrically on both sides of the optical transmitter 111.

As a basic setup, the second apparatus (120) comprises an optical receiver 122, two auxiliary four-quadrant photodetectors 123, 124, a controller 125, and an actuator 126. The optical receiver 122 is configured to receive optical wireless data signals from the first apparatus 110. The two auxiliary four-quadrant photodetectors 123, 124 are configured to detect optical wireless beacon signals from the first apparatus 110. The optical receiver 122 and the two auxiliary four-quadrant photodetectors 123, 124 are mounted on a second surface of the second apparatus 120 with the two four-quadrant photodetectors placed symmetrically on both sides of the optical receiver 122. The controller 125 is configured to derive a control signal based on optical wireless beacon signals detected by the two auxiliary four-quadrant photodetectors 123, 124 for controlling the actuator 126. The actuator 126 is configured to adjust, based on the control signal derived by the controller 125, the position of the surface on which the optical receiver 122 and the two auxiliary four-quadrant photodetectors 123, 124 are mounted, to align the second apparatus 120 with the first apparatus 110 for optical wireless data communication.

FIG. 4 illustrates one example of a beam alignment setup according to the present invention. In this setup, two apparatus or optical wireless units 301, 302 are placed opposing each other. The main components of the first unit or apparatus 301are demonstrated. The high-speed optical transceiver 307 is placed in the center of the board or surface of the apparatus 301. The auxiliary beacon transmitters 305, 306 are placed next to the optical transceiver 307 with an equal distance b = b' from the optical transceiver 307, while the two auxiliary four-quadrant receivers 303, 304 are placed next to the optical transceiver 307 with an equal distance a = a'. The mechanical actuators (not shown in the figure) will move each complete unit 301, 302 independently in the x-y axis (roll/pitch), according to the received signal tracked in the two auxiliary four-quadrant receivers 303, 304 coming from the opposite unit 302.

The key components of an apparatus 301 are:
- an optical wireless high-speed transceiver 307 comprising a narrow beam emitter and receiver;
- two auxiliary beacon transmitters 305, 306, placed around the high-speed transceiver 307, sending low-frequency beacon signals with the same amount of output power;
- an optical compensation feedback mechanism for the auxiliary transmitters, which includes a photodiode placed next to each transmitter;
- two auxiliary four-quadrant photoreceiver 303, 304, placed around the high-speed transceiver 307, to detect the beacons from the opposite unit 302 for beam alignment;
- a mechanical actuator in two axes (roll and pitch), to align the optical transceiver 307 towards the opposite unit 302.

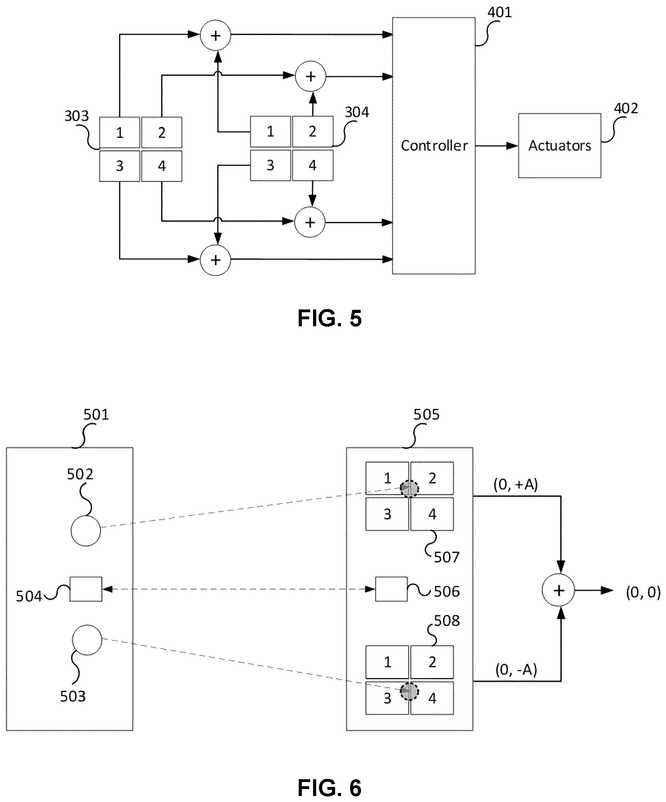

FIG. 5 shows an implementation example of a control loop in apparatus 301, 302. As illustrated in this implementation, the signals received on a corresponding quadrant of the two auxiliary four- quadrant photoreceivers are summed. This, together with the use of two auxiliary beacon transmitters used in the opposite unit 302 to generate the same beacon, will compensate for the tracking deviation produced by the physical separation between the auxiliary beacon transmitters/auxiliary four- quadrant photoreceivers and the high-speed optical transceiver.

The sum of the signals from the two four-quadrant photoreceivers generates four signals, which are fed to the Analog to Digital Converters (ADCs) in a controller 401 of the apparatus 301. This controller 401 will process the signals to generate error vectors and create a closed control loop with the mechanical actuator 402. The actuator will stop when the error is below a certain threshold or close to zero with a predefined tolerance, and therefore the two units 301, 302 are aligned.

FIG. 6 illustrates a situation when two optical communication units 501, 505 are aligned. For simplification, only the high-speed optical transceiver 504 and the auxiliary beacon transmitters 502, 503 are represented in the first unit 501 and only the high-speed optical transceiver 506 and the auxiliary four-quadrant receivers 507, 508 are represented in the second unit 505. As the auxiliary beacon transmitters 502, 503 of the first unit 501 and the auxiliary four-quadrant receivers 507, 508 of the second unit 505 are aligned in the x-axis, the spot image will produce, after operating with the measured signals of the four quadrant sectors, a zero in the x-axis obtained from both auxiliary receivers. For the y-axis, due to the separation between the transmitters 502, 503, an offset (+A) will be produced on the first auxiliary receiver 507 total output, and an equal opposite offset (-A) on the second auxiliary receiver 508. The resulting sum of both vectors will be (0, 0), indicating the system is aligned. Although in FIG. 5 the signals of each individual sector of each four-quadrant PD are summed in an analog way, the overall output is processed digitally to generate the x-y vector and error. Thus, in FIG. 6, to illustrate better the concept, it is represented as an x-y vector per four-quadrant PD and summed up after.

It is necessary to keep the two auxiliary transmitters emitting the same amount of optical power, which may not be always satisfied due to LED/Laser binning and ageing. This issue can be addressed by adding an extra photodiode next to both auxiliary transmitters, which will add an extra optical loop to ensure approximately the same amount of transmitted optical power. This photodiode, placed on the board close to the lens of the transmitter, will pick up enough leakage optical power to detect the emitted signal strength.

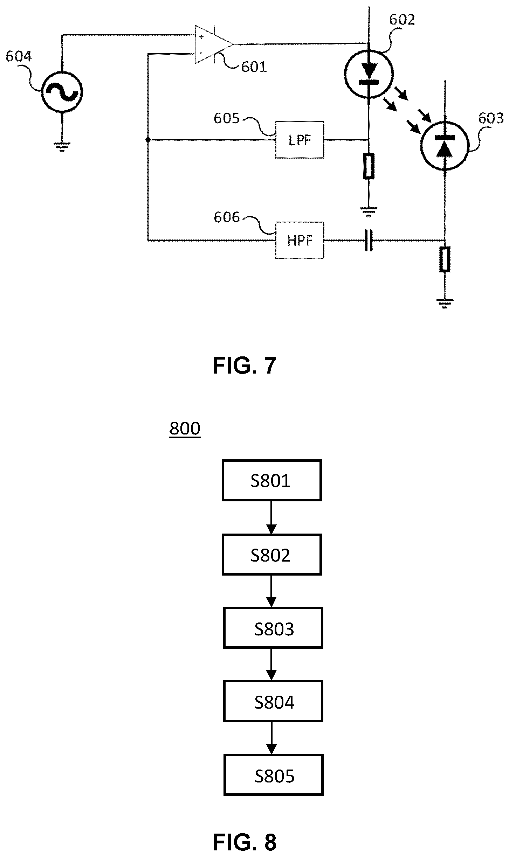

FIG. 7 shows an implementation example of a local calibration loop to calibrate the optical power emitted by an auxiliary beacon transmitter. The auxiliary beacon signal is generated by 604, which is amplified by a current driver 601 and transmitted by an LED/Laser 602. The low pass filter 605 forms the current feedback path. The photodiode 603 detects the transmitted signal, which is fed back through a high pass filter 606 that forms the optical feedback. When the signals obtained by the photodiode 603 and from the optical feedback path 606 are equal (or within a predefined tolerance level) in both auxiliary beacon transmitters, a variation in any of them in the emitted optical power will be corrected by the optical feedback, adjusting the current in the amplifier.

FIG. 8 shows a flow chart of a method 800 carried out by an apparatus 301 according to the present invention. A method 800 of an apparatus 301 for carrying out optical wireless communication with a remote apparatus 302, the apparatus 301 comprising an optical transceiver, two auxiliary beacon transmitters 305, 306, and two auxiliary four-quadrant photodetectors 303, 304 mounted on a same surface of the apparatus 301, wherein the two auxiliary beacon transmitters 305, 306, as well as the two auxiliary four-quadrant photodetectors 303, 304, are placed symmetrically on both sides of the optical transceiver respectively; the method 800 comprising the steps of the apparatus 301:
- sending, in step S801, optical wireless beacon signals, by the two auxiliary beacon transmitters 305, 306, with a same amount of optical power for assisting a beam alignment procedure in the remote apparatus 302;
- detecting, in step S802, optical wireless beacon signals from the remote apparatus 302 by the two auxiliary four-quadrant photodetectors 303, 304;
- deriving, in step S803, a control signal based on the optical wireless beacon signals detected by the two auxiliary four-quadrant photodetectors 303, 304; and
- adjusting, in step S804, based on the control signal, the position of the surface to align the apparatus 301 with the remote apparatus 302 for optical wireless data communication; and
- carrying out, in step S805, bi-directional optical wireless data communication with the remote apparatus 302.

The methods according to the invention may be implemented on a computer as a computer implemented method, or in dedicated hardware, or in a combination of both.

Executable code for a method according to the invention may be stored on computer/machine readable storage means. Examples of computer/machine readable storage means include non-volatile memory devices, optical storage medium/devices, solid-state media, integrated circuits, servers, etc. Preferably, the computer program product comprises non-transitory program code means stored on a computer readable medium for performing a method according to the invention when said program product is executed on a computer.

Methods, systems, and computer-readable media (transitory and non-transitory) may also be provided to implement selected aspects of the above-described embodiments.

## Claims

1. An optical wireless communication system (100) comprising:
- a first apparatus (110) comprising:
- an optical transmitter (111) configured to send optical wireless data signals to a remote second apparatus (120);
- two auxiliary beacon transmitters (115, 116) configured to send optical wireless beacon signals with approximately a same amount of optical power for assisting a beam alignment procedure in the second apparatus (120); wherein the optical transmitter (111) and the two auxiliary beacon transmitters (115, 116) are mounted on a first surface of the first apparatus (110) with the two auxiliary beacon transmitters (115, 116) placed symmetrically on both sides of the optical transmitter (111);
- a second apparatus (120) comprising:
- an optical receiver (122) configured to receive optical wireless data signals from the first apparatus (110);
- two auxiliary four-quadrant photodetectors (123, 124) configured to detect optical wireless beacon signals from the first apparatus (110); wherein the optical receiver (122) and the two auxiliary four-quadrant photodetectors (123, 124) are mounted on a second surface of the second apparatus (120) with the two four-quadrant photodetectors placed symmetrically on both sides of the optical receiver (122);
- a controller configured to derive a control signal based on optical wireless beacon signals detected by the two auxiliary four-quadrant photodetectors (123, 124) for controlling an actuator; and
- the actuator configured to adjust, based on the control signal derived by the controller, the position of the surface on which the optical receiver (122) and the two auxiliary four-quadrant photodetectors (123, 124) are mounted, to align the second apparatus (120) with the first apparatus (110) for optical wireless data communication.

2. The optical wireless communication system (100) of claim 1, wherein the first surface has a first axis in parallel to a horizontal plane and a second axis perpendicular to the first axis, and the second surface has a third axis in parallel to the horizontal plane and a fourth axis perpendicular to the third axis;
wherein the optical wireless communication system (100) is arranged such that either
- the two auxiliary beacon transmitters (115, 116) and the optical transmitter (111) are placed along the first axis of the first surface, and the two auxiliary four-quadrant photodetectors (123, 124) and the optical receiver (122) are placed along the fourth axis of the second surface, or
- the two auxiliary beacon transmitters (115, 116) and the optical transmitter (111) are placed along the second axis of the first surface, and the two auxiliary four-quadrant photodetectors (123, 124) and the optical receiver (122) are placed along the third axis of the second surface, or
- the two auxiliary beacon transmitters (115, 116) and the optical transmitter (111) are placed along the first axis of the first surface, and the two auxiliary four-quadrant photodetectors (123, 124) and the optical receiver (122) are placed along the third axis of the second surface, or
- the two auxiliary beacon transmitters (115, 116) and the optical transmitter (111) are placed along the second axis of the first surface, and the two auxiliary four-quadrant photodetectors (123, 124) and the optical receiver (122) are placed along the fourth axis of the second surface.

3. The optical wireless communication system (100) of claim 1 or 2, wherein the control signal is derived based on a comparison among four signals each representing a summation of detected optical wireless beacon signals in corresponding quadrants of the two auxiliary four-quadrant photodetectors (123, 124).

4. The optical wireless communication system (100) of any one of the previous claims, wherein the control signal is used to control the actuator to adjust the position of the second surface along the third and/or the fourth axis or rotate the second surface around the third and/or the fourth axis.

5. The optical wireless communication system (100) of any one of the previous claims, wherein the first apparatus (110) further comprises a local calibration loop to calibrate the optical power emitted by the two auxiliary beacon transmitters (115, 116).

6. The optical wireless communication system (100) of claim 5, wherein the local calibration loop comprises two photodiodes, each placed next to a respective auxiliary beacon transmitter and configured to respectively detect leakage optical power of the respective auxiliary beacon transmitter (115, 116) for estimating an actual emitted signal strength of an individual auxiliary beacon transmitter.

7. The optical wireless communication system (100) of any one of the previous claims, wherein the first apparatus (110) and the second apparatus (120) are configured to carry out bi-directional optical wireless data communication, wherein the optical transmitter (111) of the first apparatus (110) and the optical receiver (122) of the second apparatus (120) are both optical transceivers, and the first apparatus (110) and the second apparatus (120) further comprise all other modules of each other.

8. An apparatus (301) comprising
- an optical transceiver (307) configured to carry out bi-directional optical wireless data communication with a remote apparatus (302);
- two auxiliary beacon transmitters (305, 306) configured to send optical wireless beacon signals with a same amount of optical power for assisting a beam alignment procedure in the remote apparatus (302);
- two auxiliary four-quadrant photodetectors (303, 304) configured to detect optical wireless beacon signals from the remote apparatus (302);
wherein the optical transceiver (307), the two auxiliary beacon transmitters (305, 306), and the two auxiliary four-quadrant photodetectors (303, 304) are all mounted on a same surface of the apparatus (301), and the two auxiliary beacon transmitters (305, 306), as well as the two auxiliary four-quadrant photodetectors (303, 304), are placed symmetrically on both sides of the optical transceiver (307) respectively; the apparatus (301) further comprising:
- a controller configured to derive a control signal based on the optical wireless beacon signals detected by the two auxiliary four-quadrant photodetectors (303, 304) for controlling an actuator; and
- the actuator configured to adjust, based on the control signal derived by the controller, the position of the surface to align the apparatus (301) with the remote apparatus (302) for optical wireless data communication.

9. The apparatus (301) of claim 8, wherein the surface has a first axis in parallel to a horizontal plane and a second axis perpendicular to the first axis;
wherein the apparatus (301) is arranged such that the optical transceiver (307) is placed at the intersection of the first axis and the second axis, and
- the two auxiliary beacon transmitters (305, 306) are placed along the first axis and the two auxiliary four-quadrant photodetectors (303, 304) are placed along the second axis, or
- the two auxiliary beacon transmitters (305, 306) are placed along the second axis and the two auxiliary four-quadrant photodetectors (303, 304) are placed along the first axis.

10. The apparatus (301) of claim 8 or 9, wherein the control signal is derived based on a comparison among four signals each representing a summation of detected optical wireless beacon signals in corresponding quadrants of the two auxiliary four-quadrant photodetectors (303, 304).

11. The apparatus (301) of any one of the previous claims 8-10, wherein the control signal is used to control the actuator to adjust the position of the surface along the first and/or the second axis.

12. The apparatus (301) of any one of the previous claims 8-11, wherein the apparatus (301) further comprises a local calibration loop to calibrate the optical power emitted by the two auxiliary beacon transmitters (305, 306).

13. The apparatus (301) of claim 12, wherein the local calibration loop comprises two photodiodes, each placed next to a respective auxiliary beacon transmitter and configured to respectively detect leakage optical power of the respective auxiliary beacon transmitter (305, 306) for estimating an actual emitted signal strength of an individual auxiliary beacon transmitter.

14. A method (800) of using an apparatus (301) for carrying out optical wireless communication with a remote apparatus (302), the apparatus (301) comprising an optical transceiver (307), two auxiliary beacon transmitters (305, 306), and two auxiliary four-quadrant photodetectors (303, 304) mounted on a same surface of the apparatus (301), wherein the two auxiliary beacon transmitters (305, 306), as well as the two auxiliary four-quadrant photodetectors (303, 304), are placed symmetrically on both sides of the optical transceiver (307) respectively;
the method (800) comprising the steps of the apparatus (301):
- sending (S801) optical wireless beacon signals, by the two auxiliary beacon transmitters (305, 306), with approximately a same amount of optical power for assisting a beam alignment procedure in the remote apparatus (302);
- detecting (S802) optical wireless beacon signals from the remote apparatus (302) by the two auxiliary four-quadrant photodetectors (303, 304);
- deriving (S803) a control signal based on the optical wireless beacon signals detected by the two auxiliary four-quadrant photodetectors (303, 304); and
- adjusting (S804), based on the control signal, the position of the surface to align the apparatus (301) with the remote apparatus (302) for optical wireless data communication; and
- carrying out (S805) bi-directional optical wireless data communication with the remote apparatus (302).

## Patentansprüche

1. System (100) für optische drahtlose Kommunikation, umfassend:
- eine erste Einrichtung (110), umfassend:
- einen optischen Sender (111), der konfiguriert ist, um optische drahtlose Datensignale an eine entfernte zweite Einrichtung (120) zu senden;
- zwei Hilfsbakensender (115, 116), die konfiguriert sind, um optische drahtlose Bakensignale mit etwa der gleichen Menge an optischer Leistung zu senden, um ein Strahlausrichtungsverfahren in der zweiten Einrichtung (120) zu unterstützen; wobei der optische Sender (111) und die zwei Hilfsbakensender (115, 116) auf einer ersten Oberfläche der ersten Einrichtung (110) montiert sind, wobei die zwei Hilfsbakensender (115, 116) symmetrisch auf beiden Seiten des optischen Senders (111) angeordnet sind;
- eine zweite Einrichtung (120), umfassend:
- einen optischen Empfänger (122), der konfiguriert ist, um optische drahtlose Datensignale von der Einrichtung (110) zu empfangen;
- zwei Hilfs-Vier-Quadranten-Photodetektoren (123, 124), die konfiguriert sind, um optische drahtlose Bakensignale von der ersten Einrichtung (110) zu detektieren; wobei der optische Empfänger (122) und die zwei Hilfs-Vier-Quadranten-Photodetektoren (123, 124) auf einer zweiten Oberfläche der zweiten Einrichtung (120) montiert sind, wobei die zwei Vier-Quadranten-Photodetektoren symmetrisch auf beiden Seiten des optischen Empfängers (122) angeordnet sind;
- eine Steuerung, die konfiguriert ist, um ein Steuersignal basierend auf optischen drahtlosen Bakensignalen abzuleiten, die von den zwei Hilfs-Vier-Quadranten-Photodetektoren (123, 124) detektiert werden, zum Steuern eines Aktuators; und
- den Aktuator, der konfiguriert ist, um basierend auf dem von der Steuerung abgeleiteten Steuersignal die Position der Oberfläche einzustellen, auf der der optische Empfänger (122) und die zwei Hilfs-Vier-Quadranten-Photodetektoren (123, 124) montiert sind, um die zweite Einrichtung (120) an der ersten Einrichtung (110) für optische drahtlose Datenkommunikation auszurichten.

2. System für optische drahtlose Kommunikation (100) nach Anspruch 1, wobei die erste Oberfläche eine erste Achse parallel zu einer horizontalen Ebene und eine zweite Achse senkrecht zu der ersten Achse aufweist, und die zweite Oberfläche eine dritte Achse parallel zu der horizontalen Ebene und eine vierte Achse senkrecht zu der dritten Achse aufweist;
wobei das optische drahtlose Kommunikationssystem (100) derart angeordnet ist, dass entweder
- die zwei Hilfsbakensender (115, 116) und der optische Sender (111) entlang der ersten Achse der ersten Oberfläche angeordnet sind und die zwei Hilfs-Vier-Quadranten-Photodetektoren (123, 124) und der optische Empfänger (122) entlang der vierten Achse der zweiten Oberfläche angeordnet sind, oder
- die zwei Hilfsbakensender (115, 116) und der optische Sender (111) entlang der zweiten Achse der ersten Oberfläche angeordnet sind, und die zwei Hilfs-Vier-Quadranten-Photodetektoren (123, 124) und der optische Empfänger (122) entlang der dritten Achse der zweiten Oberfläche angeordnet sind, oder
- die zwei Hilfsbakensender (115, 116) und der optische Sender (111) entlang der ersten Achse der ersten Oberfläche angeordnet sind und die zwei Hilfs-Vier-Quadranten-Photodetektoren (123, 124) und der optische Empfänger (122) entlang der dritten Achse der zweiten Oberfläche angeordnet sind, oder
- die zwei Hilfsbakensender (115, 116) und der optische Sender(111) entlang der zweiten Achse der ersten Oberfläche angeordnet sind, und die zwei Hilfs-Vier-Quadranten-Photodetektoren (123, 124) und der optische Empfänger (122) entlang der vierten Achse der zweiten Oberfläche angeordnet sind.

3. System für optische drahtlose Kommunikation (100) nach Anspruch 1 oder 2, wobei das Steuersignal basierend auf einem Vergleich zwischen vier Signalen abgeleitet wird, die jeweils eine Summierung von detektierten optischen drahtlosen Bakensignalen in entsprechenden Quadranten der zwei Hilfs-Vier-Quadranten-Photodetektoren (123, 124) darstellen.

4. Optisches drahtloses Kommunikationssystem (100) nach einem der vorstehenden Ansprüche, wobei das Steuersignal verwendet wird, um den Aktuator zu steuern, um die Position der zweiten Oberfläche entlang der dritten und/oder der vierten Achse einzustellen oder die zweite Oberfläche um die dritte und/oder die vierte Achse zu drehen.

5. System für optische drahtlose Kommunikation (100) nach einem der vorstehenden Ansprüche, wobei die erste Einrichtung (110) ferner eine lokale Kalibrierungsschleife umfasst, um die optische Leistung zu kalibrieren, die von den zwei Hilfsbakensendern (115, 116) emittiert wird.

6. System für optische drahtlose Kommunikation (100) nach Anspruch 5, wobei die lokale Kalibrierungsschleife zwei Photodioden umfasst, die jeweils neben einem jeweiligen Hilfsbakensender platziert und konfiguriert sind, um jeweils optische Leckleistung des jeweiligen Hilfsbakensenders (115, 116) zu detektieren, um eine tatsächliche emittierte Signalstärke eines einzelnen Hilfsbakensenders zu schätzen.

7. System für optische drahtlose Kommunikation (100) nach einem der vorstehenden Ansprüche, wobei die erste Einrichtung (110) und die zweite Einrichtung (120) konfiguriert sind, um bidirektionale optische drahtlose Datenkommunikation auszuführen, wobei der optische Sender (111) der ersten Einrichtung (110) und der optische Empfänger (122) der zweiten Einrichtung (120) beide optische Sendeempfänger sind, und die erste Einrichtung (110) und die zweite Einrichtung (120) ferner alle anderen Module voneinander umfassen.

8. Einrichtung (301), umfassend
- einen optischen Sendeempfänger (307), der konfiguriert ist, um eine bidirektionale optische drahtlose Datenkommunikation mit einer entfernten Einrichtung (302) auszuführen;
- zwei Hilfsbakensender (305, 306), die konfiguriert sind, um optische drahtlose Bakensignale mit einer gleichen Menge an optischer Leistung zum Unterstützen eines Strahlausrichtungsverfahrens in der entfernten Einrichtung (302) zu senden;
- zwei Hilfs-Vier-Quadranten-Photodetektoren (303, 304), die konfiguriert sind, um optische drahtlose Bakensignale von der entfernten Einrichtung (302) zu detektieren;
wobei der optische Sendeempfänger (307), die zwei Hilfsbakensender (305, 306) und die zwei Hilfs-Vier-Quadranten-Photodetektoren (303, 304) alle auf einer gleichen Oberfläche der Einrichtung (301) montiert sind, und die zwei Hilfsbakensender (305, 306) sowie die zwei Hilfs-Vier-Quadranten-Photodetektoren (303, 304) jeweils symmetrisch auf beiden Seiten des optischen Sendeempfängers (307) angeordnet sind;
die Einrichtung (301), ferner umfassend:
- eine Steuerung, die konfiguriert ist, um ein Steuersignal basierend auf den optischen drahtlosen Bakensignalen, die von den zwei Hilfs-Vier-Quadranten-Photodetektoren (303, 304) detektiert werden, zur Steuerung eines Aktuators abzuleiten; und
- der Aktuator konfiguriert ist, um basierend auf dem von der Steuerung abgeleiteten Steuersignal die Position der Oberfläche einzustellen, um die Einrichtung (301) an der entfernten Einrichtung (302) für optische drahtlose Datenkommunikation auszurichten.

9. Einrichtung (301) nach Anspruch 8, wobei die Oberfläche eine erste Achse parallel zu einer horizontalen Ebene und eine zweite Achse senkrecht zu der ersten Achse aufweist;
wobei die Einrichtung (301) so angeordnet ist, dass der optische Sendeempfänger (307) an dem Schnittpunkt der ersten Achse und der zweiten Achse platziert ist, und
- die zwei Hilfsbakensender (305, 306) entlang der ersten Achse angeordnet sind und die zwei Hilfs-Vierquadranten-Photodetektoren (303, 304) entlang der zweiten Achse angeordnet sind, oder
- die zwei Hilfsbakensender (305, 306) entlang der zweiten Achse angeordnet sind und die zwei Hilfs-Vierquadranten-Photodetektoren (303, 304) entlang der ersten Achse angeordnet sind.

10. Einrichtung (301) nach Anspruch 8 oder 9, wobei das Steuersignal basierend auf einem Vergleich zwischen vier Signalen abgeleitet wird, die jeweils eine Summierung von detektierten optischen drahtlosen Bakensignalen in entsprechenden Quadranten der zwei Hilfs-Vier-Quadranten-Photodetektoren (303, 304) darstellen.

11. Einrichtung (301) nach einem der vorstehenden Ansprüche 8 bis 10, wobei das Steuersignal verwendet wird, um den Aktuator zu steuern, um die Position der Oberfläche entlang der ersten und/oder der zweiten Achse einzustellen.

12. Einrichtung (301) nach einem der vorstehenden Ansprüche 8 bis 11, wobei die Einrichtung (301) ferner eine lokale Kalibrierungsschleife umfasst, um die optische Leistung zu kalibrieren, die von den zwei Hilfsbakensendern (305, 306) emittiert wird.

13. Einrichtung (301) nach Anspruch 12, wobei die lokale Kalibrierungsschleife zwei Photodioden umfasst, die jeweils neben einem jeweiligen Hilfsbakensender platziert und konfiguriert sind, um jeweils optische Leckleistung des jeweiligen Hilfsbakensenders (305, 306) zu detektieren, um eine tatsächliche emittierte Signalstärke eines einzelnen Hilfsbakensenders zu schätzen.

14. Verfahren (800) zur Verwendung einer Einrichtung (301) zum Durchführen einer optischen drahtlosen Kommunikation mit einer entfernten Einrichtung (302), wobei die Einrichtung (301) einen optischen Sendeempfänger (307), zwei Hilfsbakensender (305, 306) und zwei Hilfs-Vier-Quadranten-Photodetektoren (303, 304) umfasst, die auf einer gleichen Oberfläche der Einrichtung (301) montiert sind, wobei die zwei Hilfsbakensender (305, 306) sowie die zwei Hilfs-Vier-Quadranten-Photodetektoren (303, 304) symmetrisch auf beiden Seiten des optischen Sendeempfängers (307) angeordnet sind;
wobei das Verfahren (800) die Schritte der Einrichtung (301) umfasst:
- Senden (S801) von optischen drahtlosen Bakensignalen durch die zwei Hilfsbakensender (305, 306) mit etwa der gleichen Menge an optischer Leistung zur Unterstützung eines Strahlausrichtungsverfahrens in der entfernten Einrichtung (302);
- Erfassen (S802) optischer drahtloser Bakensignale von der entfernten Einrichtung (302) durch die zwei Hilfs-Vier-Quadranten-Photodetektoren (303, 304);
- Ableiten (S803) eines Steuersignals basierend auf den optischen drahtlosen Bakensignalen, die von den zwei Hilfs-Vier-Quadranten-Photodetektoren (303, 304) detektiert werden; und
- Einstellen (S804), basierend auf dem Steuersignal, der Position der Oberfläche, um die Einrichtung (301) an der entfernten Einrichtung (302) für optische drahtlose Datenkommunikation auszurichten; und
- Durchführen (S805) einer bidirektionalen optischen drahtlosen Datenkommunikation mit der entfernten Einrichtung (302).

## Revendications

1. Système de communication optique sans fil (100) comprenant :
- un premier appareil (110) comprenant :
- un émetteur optique (111) configuré pour envoyer des signaux de données optiques sans fil à un second appareil distant (120) ;
- deux émetteurs de balise auxiliaires (115, 116) configurés pour envoyer des signaux de balise optique sans fil avec approximativement la même quantité de puissance optique pour aider une procédure d'alignement de faisceau dans le second appareil (120) ; dans lequel l'émetteur optique (111) et les deux émetteurs de balise auxiliaires (115, 116) sont montés sur une première surface du premier appareil (110) avec les deux émetteurs de balise auxiliaires (115, 116) placés symétriquement de part et d'autre de l'émetteur optique (111) ;
- un second appareil (120) comprenant :
- un récepteur optique (122) configuré pour recevoir des signaux optiques de données sans fil provenant du premier appareil (110) ;
- deux photodétecteurs auxiliaires à quatre quadrants (123, 124) configurés pour détecter des signaux de balise optique sans fil provenant du premier appareil (110) ; dans lequel le récepteur optique (122) et les deux photodétecteurs auxiliaires à quatre quadrants (123, 124) sont montés sur une seconde surface du second appareil (120) avec les deux photodétecteurs à quatre quadrants placés symétriquement de part et d'autre du récepteur optique (122) ;
- un dispositif de commande configuré pour dériver un signal de commande en fonction des signaux de balise optique sans fil détectés par les deux photodétecteurs auxiliaires à quatre quadrants (123, 124) pour commander un actionneur ; et
- l'actionneur étant configuré pour ajuster, en fonction du signal de commande dérivé par le dispositif de commande, la position de la surface sur laquelle le récepteur optique (122) et les deux photodétecteurs auxiliaires à quatre quadrants (123, 124) sont montés, afin d'aligner le second appareil (120) avec le premier appareil (110) pour la communication optique de données sans fil.

2. Système de communication optique sans fil (100) selon la revendication 1, dans lequel la première surface a un premier axe parallèle à un plan horizontal et un deuxième axe perpendiculaire au premier axe, et la seconde surface a un troisième axe parallèle au plan horizontal et un quatrième axe perpendiculaire au troisième axe ;
dans lequel le système de communication optique sans fil (100) est agencé de telle sorte que soit
- les deux émetteurs de balise auxiliaires (115, 116) et l'émetteur optique (111) sont placés le long du premier axe de la première surface, et les deux photodétecteurs auxiliaires à quatre quadrants (123, 124) et le récepteur optique (122) sont placés le long du quatrième axe de la seconde surface, ou
- les deux émetteurs de balise auxiliaires (115, 116) et l'émetteur optique (111) sont placés le long du deuxième axe de la première surface, et les deux photodétecteurs auxiliaires à quatre quadrants (123, 124) et le récepteur optique (122) sont placés le long du troisième axe de la seconde surface, ou
- les deux émetteurs de balise auxiliaires (115, 116) et l'émetteur optique (111) sont placés le long du premier axe de la première surface, et les deux photodétecteurs auxiliaires à quatre quadrants (123, 124) et le récepteur optique (122) sont placés le long du troisième axe de la seconde surface, ou
- les deux émetteurs de balise auxiliaires (115, 116) et l'émetteur optique (111) sont placés le long du deuxième axe de la première surface, et les deux photodétecteurs auxiliaires à quatre quadrants (123, 124) et le récepteur optique (122) sont placés le long du quatrième axe de la seconde surface.

3. Système de communication optique sans fil (100) selon la revendication 1 ou 2, dans lequel le signal de commande est dérivé en fonction d'une comparaison entre quatre signaux, représentant chacun une sommation de signaux de balises optiques sans fil détectés dans des quadrants correspondants des deux photodétecteurs auxiliaires à quatre quadrants (123, 124).

4. Système de communication optique sans fil (100) selon l'une quelconque des revendications précédentes, dans lequel le signal de commande est utilisé pour commander l'actionneur afin d'ajuster la position de la seconde surface le long du troisième et/ou du quatrième axe ou de faire tourner la seconde surface autour du troisième et/ou du quatrième axe.

5. Système de communication optique sans fil (100) selon l'une quelconque des revendications précédentes, dans lequel le premier appareil (110) comprend en outre une boucle d'étalonnage locale pour étalonner la puissance optique émise par les deux émetteurs de balise auxiliaires (115, 116).

6. Système de communication optique sans fil (100) selon la revendication 5, dans lequel la boucle d'étalonnage locale comprend deux photodiodes, chacune placée à côté d'un émetteur de balise auxiliaire respectif et configurée pour détecter respectivement une puissance optique de fuite de l'émetteur de balise auxiliaire respectif (115, 116) pour estimer une intensité de signal émis réelle d'un émetteur de balise auxiliaire individuel.

7. Système de communication optique sans fil (100) selon l'une quelconque des revendications précédentes, dans lequel le premier appareil (110) et le second appareil (120) sont configurés pour réaliser une communication optique bidirectionnelle sans fil de données, dans lequel l'émetteur optique (111) du premier appareil (110) et le récepteur optique (122) du second appareil (120) sont tous deux des émetteurs-récepteurs optiques, et le premier appareil (110) et le second appareil (120) comprennent en outre tous les autres modules de l'un de l'autre.

8. Appareil (301) comprenant
- un émetteur-récepteur optique (307) configuré pour effectuer une communication optique bidirectionnelle sans fil de données avec un appareil distant (302) ;
- deux émetteurs de balise auxiliaires (305, 306) configurés pour envoyer des signaux de balise optique sans fil avec une même quantité de puissance optique pour aider une procédure d'alignement de faisceau dans l'appareil distant (302) ;
- deux photodétecteurs auxiliaires à quatre quadrants (303, 304) configurés pour détecter des signaux de balise optique sans fil provenant de l'appareil distant (302) ;
dans lequel l'émetteur-récepteur optique (307), les deux émetteurs de balise auxiliaires (305, 306) et les deux photodétecteurs auxiliaires à quatre quadrants (303, 304) sont tous montés sur une même surface de l'appareil (301), et les deux émetteurs de balise auxiliaires (305, 306), ainsi que les deux photodétecteurs auxiliaires à quatre quadrants (303, 304), sont placés symétriquement de part et d'autre de l'émetteur-récepteur optique (307) respectivement ;
l'appareil (301) comprenant en outre :
- un dispositif de commande configuré pour dériver un signal de commande en fonction des signaux de balise optique sans fil détectés par les deux photodétecteurs auxiliaires à quatre quadrants (303, 304) pour commander un actionneur ; et
- l'actionneur configuré pour ajuster, en fonction du signal de commande dérivé par le dispositif de commande, la position de la surface pour aligner l'appareil (301) avec l'appareil distant (302) pour la communication optique de données sans fil.

9. Appareil (301) selon la revendication 8, dans lequel la surface a un premier axe parallèle à un plan horizontal et un deuxième axe perpendiculaire au premier axe ;
dans lequel l'appareil (301) est agencé de telle sorte que l'émetteur-récepteur optique (307) est placé à l'intersection du premier axe et du deuxième axe, et
- les deux émetteurs de balise auxiliaires (305, 306) sont placés le long du premier axe et les deux photodétecteurs auxiliaires à quatre quadrants (303, 304) sont placés le long du deuxième axe, ou
- les deux émetteurs de balise auxiliaires (305, 306) sont placés le long du deuxième axe et les deux photodétecteurs auxiliaires à quatre quadrants (303, 304) sont placés le long du premier axe.

10. Appareil (301) selon la revendication 8 ou 9, dans lequel le signal de commande est dérivé en fonction d'une comparaison entre quatre signaux, représentant chacun une sommation de signaux de balise optique sans fil détectés dans des quadrants correspondants des deux photodétecteurs auxiliaires à quatre quadrants (303, 304).

11. Appareil (301) selon l'une quelconque des revendications 8 à 10 précédentes, dans lequel le signal de commande est utilisé pour commander l'actionneur afin d'ajuster la position de la surface le long du premier et/ou du deuxième axe.

12. Appareil (301) selon l'une quelconque des revendications 8 à 11 précédentes, dans lequel l'appareil (301) comprend en outre une boucle d'étalonnage locale pour étalonner la puissance optique émise par les deux émetteurs de balise auxiliaires (305, 306).

13. Appareil (301) selon la revendication 12, dans lequel la boucle d'étalonnage locale comprend deux photodiodes, chacune placée à côté d'un émetteur de balise auxiliaire respectif et configurée pour détecter respectivement une puissance optique de fuite de l'émetteur de balise auxiliaire respectif (305, 306) afin d'estimer une intensité de signal émis réelle d'un émetteur de balise auxiliaire individuel.

14. Procédé (800) d'utilisation d'un appareil (301) pour réaliser une communication optique sans fil avec un appareil distant (302), l'appareil (301) comprenant un émetteur-récepteur optique (307), deux émetteurs de balise auxiliaires (305, 306) et deux photodétecteurs auxiliaires à quatre quadrants (303, 304) montés sur une même surface de l'appareil (301), dans lequel les deux émetteurs de balise auxiliaires (305, 306), ainsi que les deux photodétecteurs auxiliaires à quatre quadrants (303, 304), sont placés symétriquement de part et d'autre de l'émetteur-récepteur optique (307) respectivement ;
le procédé (800) comprenant les étapes de l'appareil (301) :
- l'envoi (S801) de signaux de balise optique sans fil, par les deux émetteurs de balise auxiliaires (305, 306), avec approximativement la même quantité de puissance optique pour aider une procédure d'alignement de faisceau dans l'appareil distant (302) ;
- la détection (S802) de signaux de balise optique sans fil provenant de l'appareil distant (302) par les deux photodétecteurs auxiliaires à quatre quadrants (303, 304) ;
- la dérivation (S803) d'un signal de commande en fonction des signaux de balise optique sans fil détectés par les deux photodétecteurs auxiliaires à quatre quadrants (303, 304) ; et
- l'ajustement (S804), en fonction du signal de commande, de la position de la surface pour aligner l'appareil (301) avec l'appareil distant (302) pour la communication optique de données sans fil ; et
- la réalisation (S805) d'une communication optique bidirectionnelle sans fil de données avec l'appareil distant (302).
